# EUROPEAN PATENT APPLICATION

(11) **EP 2 653 706 A1**
(43) Date of publication of application: **23.10.2013**
(21) Application number: 12164932.1
(22) Date of filing: 20.04.2012
(51) Int. Cl.: F02D 41/00, F02D 41/22, F02D 19/06

(54) **Monitoring the fuel injection system of dual fuel engines**

(71) Applicant: Caterpillar Motoren GmbH & Co. KG, 24159 Kiel (DE)
(72) Inventor: Haas, Stefan, 24107 Quarnbek / OT Flemhude (DE)
(74) Representative: Kramer - Barske - Schmidtchen

(57) **Abstract**

During the liquid fuel mode of a dual fuel internal combustion engine (10), soot may deposit at the fuel injectors (30, 42) and may jam the fuel injector needle. In such case, the liquid fuel supply system (32) may not work properly. For evaluating the mechanical function of the liquid fuel supply system (32), a common rail (34) fluidly connected to the liquid fuel supply system (32) may be monitored. In case of a mechanical malfunction of the liquid fuel supply system (32) or of the ignition fuel supply system, the dual fuel internal combustion engine (10) may be switched over from LFM to GFM, respectively.

## Description

### Technical Field

The present disclosure generally relates to dual fuel internal combustion engines, and more specifically to dual fuel internal combustion engines with injection systems.

### Background

Dual fuel internal combustion engines are capable of operating on, for example, gaseous fuel or liquid fuel or on a combination of both, thereby fulfilling increased emission standards. Herein, a dual fuel internal combustion engine operating on liquid fuel (for example Diesel fuel, light fuel oil (LFO), heavy fuel oil (HFO), and alternative fuel, such as pyrolysis oil) is referred to as operating in the liquid fuel mode and a dual fuel internal combustion engine operating on gaseous fuel (for example natural gas or biogas) is referred to as running in the gaseous fuel mode. Exemplary fields of applying dual fuel internal combustion engines include the global marine industry and power generation systems.

During the gaseous fuel mode, gaseous fuel is controllably released into an air intake port connected to a cylinder to produce a charge air/gaseous fuel mixture. After a predetermined period of time, a small amount of liquid fuel also referred to as ignition fuel may be injected into the cylinder containing the charge air/fuel mixture. The amount of the ignition fuel may be about 1 - 3 % of the adequate amount of the liquid fuel amount injected during the LFM. The compression ignites the liquid fuel, which in turn ignites the charge air/gaseous fuel mixture.

European application number 11 178 970.7 filed on 26 August 2011 by Caterpillar Motoren GmbH & Co. KG discloses a method for operating a dual fuel internal combustion engine having an ignition fuel injector for initiating the combustion process of the gaseous fuel mode, wherein the ignition injection is shifted also in the liquid fuel mode.

WO 99/46495 A1 discloses a method for ensuring delivery of at least an ignition quantity of liquid fuel in a dual fuel engine. In particular, the injection of the ignition liquid fuel amount is optimized.

The present disclosure is directed, at least in part, to improving or overcoming one or more aspects of prior systems.

### Summary of the Disclosure

According to an aspect of the present disclosure, a method for checking the mechanical function of a fuel injection system of a dual fuel internal combustion engine with a common rail and a high-pressure fuel pump for supplying the fuel injection system with liquid fuel may comprise deriving a required common rail pressure based on a desired fuel amount to be injected into a combustion chamber of the dual fuel internal combustion engine. The method may further comprise measuring the actual common rail pressure and determining a deviation between the required common rail pressure and the actual common rail pressure. In the case when the deviation exceeds a predetermined pressure threshold, the fuel injection system may be declared as not mechanically working properly.

In particular, the disclosed method for checking the mechanical function of a fuel injection system of a dual fuel internal combustion engine may be applicable to an ignition fuel injection system of a dual fuel internal combustion engine. The dual fuel internal combustion engine may comprise a common rail and a high-pressure fuel pump for supplying the fuel injection system with liquid fuel. The method for checking the mechanical function of the ignition fuel injection system may comprise deriving a required common rail pressure based on a desired fuel amount to be injected into a combustion chamber of the dual fuel internal combustion engine. The method may further comprise measuring the actual common rail pressure and determining a deviation between the required common rail pressure and the actual common rail pressure. In the case when the deviation exceeds a predetermined pressure threshold, the fuel injection system may be declared as not mechanically working properly.

According to a further aspect of the present disclosure, a method for controlling a switchover process between a gaseous fuel mode and a liquid fuel mode of a dual fuel internal combustion engine may comprise checking the mechanical function of a fuel injection system as disclosed herein. Subsequently, during the liquid fuel mode, if the fuel injection system may be declared as not mechanically working properly, the switchover process to the gaseous fuel mode may be prevented, and the dual fuel internal combustion engine may maintain operation in the liquid fuel mode. Furthermore, during the gaseous fuel mode, if the fuel injection system may be declared as not mechanically working properly, the dual fuel internal combustion engine may be switched over to the liquid fuel mode.

According to a further aspect of the present disclosure, a control system of a dual fuel internal combustion engine may comprise an fuel injection system. The control system may comprise a pressure sensor for measuring a pressure within a common rail, and a control unit configured to check the mechanical function of the fuel injection system as disclosed herein.

According to another aspect of the present disclosure, a dual fuel internal combustion engine may comprise a common rail system with a common rail, an fuel injection system with an fuel injector and a high pressure fuel pump, and a control system as disclosed herein.

Implementations may include one or more of the following features:
In some embodiments, deriving the required common rail pressure may comprise deriving a fuel amount to be supplied to the common rail by the high-pressure fuel pump that relates to the fuel amount to be injected, deriving an operating parameter for the high-pressure fuel pump based on the fuel amount to be supplied to the common rail and deriving the required common rail pressure based on the operating parameter for the high-pressure fuel pump.
In some embodiments, the analysis of the pressure deviation may comprise deriving a correction fuel amount based on the pressure deviation, and the declaration of the fuel injection system as not mechanically working properly may be based on the correction fuel amount.
In some embodiments, the fuel injection system may be declared as not mechanically working properly when it may be determined in the analysis that the correction fuel amount exceeds a predetermined fuel amount threshold.
In some embodiments, when it may be determined in the analysis that the correction fuel amount is within a predetermined fuel amount threshold, the correction fuel amount may be considered when determining the fuel amount to be supplied to the common rail by the high-pressure fuel pump.
In some embodiments, the fuel injection system may be declared as not mechanically working properly when it may be determined in the analysis that the pressure deviation exceeds a predetermined pressure threshold.
In some embodiments, the electrical function of a fuel injector of the fuel injection system may be checked. In such case, the fuel injector may be declared as not electrically working properly when an operating parameter for the fuel injector may exceed an upper threshold, for example, indicative for an electrical short, or the operating parameter for fuel injector may fall below a lower threshold, for example, indicative for a wire break.
In some embodiments, checking the electrical function of the high-pressure fuel pump may further comprise declaring the high-pressure fuel pump as not electrically working properly when an operating parameter for the high-pressure fuel pump may exceed an upper threshold, for example, indicative for an electrical short, or the operating parameter for high-pressure fuel pump (100) may fall below a lower threshold, for example, indicative for a wire break.
In some embodiments the control unit may comprise a proportional-integral-derivative module which may be configured to determine a pressure deviation between the required common rail pressure and the actual common rail pressure.
In some embodiments, the proportional-integral-derivative module may be further configured to derive a correction fuel amount based on the pressure deviation.
In some embodiments, the proportional-integral-derivative module may be further configured to provide correction fuel amount control value to the high-pressure fuel pump for adapting the fuel to be supplied to the common rail.
In some embodiments, the disclosed control system may further comprise a proportional-integral-derivative module which may be configured to determine the deviation between the required common rail pressure and the actual common rail pressure.
In some embodiments, the proportional-integral-derivative module may be further configured to derive the correction fuel amount and to control the high-pressure fuel pump to adjust the fuel amount supplied to the common rail system.

The details of several embodiments of the invention are set forth in the accompanying drawings and the description below. Other aspects, features, objects, and advantages of this disclosure will be apparent from the following description, the accompanying drawings, and the appended claims.

### Brief Description of the Drawings

Fig. 1 is a schematic cut view of a cylinder unit of a dual fuel internal combustion engine.
Fig. 2 is a flow diagram illustrating a method for controlling operation of a dual fuel internal combustion engine.
Fig. 3 is a flow diagram illustrating a method for determining a correction amount used in the method of Fig. 2.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The disclosure is based on the realization that the mechanical function of a fuel injection system of a dual fuel engine may be checked by evaluating a deviation between a required common rail pressure and an actual common rail pressure. The mechanical function of the ignition fuel injection system relates to the proper operation of the ignition fuel injector and/or the high-pressure fuel pump, which both affect the pressure within the common rail system. The required common rail pressure may be determined based on fuel amounts to be injected. The actual common rail pressure may be measured.

In case the deviation may exceed a predetermined pressure threshold, the ignition fuel injection system may, for example, be declared as not mechanically working properly.

Although the following mechanical function check of a fuel injection system will be described with respect to an ignition fuel injection system of a dual fuel internal combustion engine, it should be appreciated that the principle of the mechanical function check of a fuel injection system may also be applied to a main liquid fuel injection system of a dual fuel internal combustion engine.

During the gaseous fuel mode (GFM), if it is declared that the ignition fuel injection system of a duel fuel internal combustion engine is not working properly, the dual fuel internal combustion engine may be automatically switched to the liquid fuel mode (LFM). During the LFM, if it is declared that the ignition fuel injection system of a duel fuel internal combustion engine is not working properly, the dual fuel internal combustion engine may be prevented from switching to the GFM.

In general, checking the mechanical operation of the ignition injection system may ensure that the dual fuel internal combustion engine may be switched to the LFM, when a malfunction of the ignition injection system is determined during the GFM. In the case of a malfunction of the ignition fuel injection system when operating the dual fuel internal combustion engine in the LFM, switching over to the GFM may be prevented and the dual fuel internal combustion engine may maintain operation in the LFM.

The disclosure is further based on the realization that the deposits on the ignition fuel injector may, for example, affect the ignition fuel injector needle movement. In general, the ignition injection system required for the operation in the GFM may be affected by the combustion process. For example, combustion deposits may form on the ignition fuel injector of the ignition fuel injection system. Those combustion deposits may affect the injection of ignition fuel when the ignition fuel injection system is applied later on in the GFM. A stuck ignition fuel injector needle may affect the combustion process, especially during the GFM. For example, if the ignition fuel injector needle may be stuck in an open position, the ignition fuel injection system may continuously supply ignition fuel to the combustion chamber. This may lead to an increased fuel consumption, a decreased efficiency of the dual fuel internal combustion engine, and a lowering of the common rail pressure.

Furthermore, it has been shown that it may be advantageous that the ignition fuel injection system may be continuously operating during both modes, the LFM and the GFM. Such a continuous operation of the ignition fuel injection system during the LFM and the GFM may reduce the pollution of the ignition fuel injector with, for example, soot originating from the combustion process, especially during the liquid fuel mode.

Even if the ignition fuel injection system is continuously operated, the ignition fuel injector, particularly the ignition fuel injector needle, may be jammed due to soot originating from the combustion process. This may lead to poor combustion and, therefore, to a decreased efficiency of the dual fuel internal combustion engine.

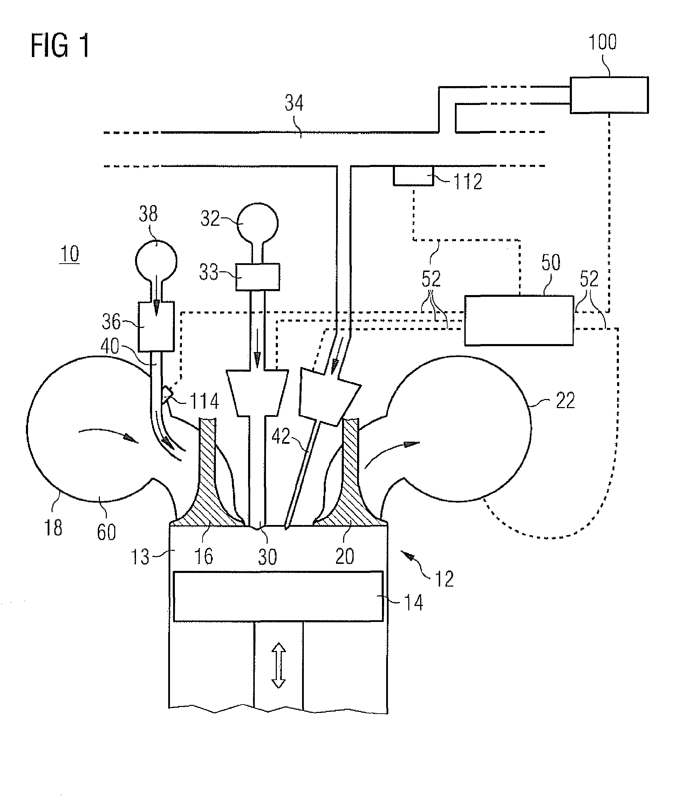

Referring to Fig. 1, a schematic cut view of a cylinder unit of a dual fuel internal combustion engine 10 is illustrated. The dual fuel internal combustion engine 10 may comprise, for example, 12, 16 or more cylinder units. Each of the cylinder units may comprise a cylinder 12 that together with a piston 14 may delimit a combustion chamber 13. An intake valve 16 may fluidly connect an inlet manifold 18 with the combustion chamber 13. An exhaust valve 20 may further fluidly connect the combustion chamber 13 with an outlet manifold 22.

A main liquid fuel system comprising inter alia a main fuel injector 30 may be provided for injection of liquid fuel into the combustion chamber 13 during operation of the dual fuel internal combustion engine 10 in the LFM. The main liquid fuel system, and in particular the main fuel injector 30, may be supplied, for instance, with HFO originating from a liquid fuel supply system 32 which may be fluidly connected to the main fuel injector 30 via a control valve 33.

A gaseous fuel system may include inter alia a gas admission valve 36 fluidly connecting a gaseous fuel supply system 38 with a gas inlet pipe 40. The gas inlet pipe 40 may comprise an opening for releasing gaseous fuel into the fluid connection between the inlet manifold 18 and the combustion chamber 13 upstream of the intake valve 16.

The gaseous fuel system may further include an ignition fuel injection system including an ignition fuel injector 42 with a high-pressure fuel pump 100 and a common rail system.

The high-pressure fuel pump 100 may be fluidly connected to a common rail 34 for supplying liquid fuel from a fuel tank (not shown) to the common rail 34. Particularly, the high-pressure fuel pump 100 may be configured to supply Diesel fuel to the common rail 34.

When operating the dual fuel internal combustion engine 10, the main liquid fuel system may supply, for instance, heavy fuel oil (HFO) originating from a HFO fuel tank (not shown) to the combustion chamber 13 during the LFM, whereas the ignition fuel system may supply, for example, Diesel fuel originating from the common rail system to the combustion chamber 13. The ignition fuel may be used for igniting the gaseous fuel during the GFM.

As shown in Fig. 1, a control system may comprise a control unit 50 and a common rail pressure sensor 114. The control unit 50 may be connected via control lines 52 with the gas admission valve 36, the main fuel injector 30, the ignition fuel injector 42, and the high-pressure fuel pump 100. In some embodiments, the control unit 50 may be further connected to various sensors via the control lines 52 including, for example, a common rail pressure sensor 112 measuring the pressure within the common rail 34, and an intake manifold pressure sensor 114 measuring the pressure within the inlet manifold 18.

In general, the control unit 50 may be configured to control operation of the dual fuel internal combustion engine based on a required mechanical output and, in some systems, a required thermal output. The control unit 50 may be configured to monitor and check the electrical and mechanical function of the ignition fuel injection system and the high-pressure fuel pump 100. The control unit 50 may be further configured to control operation of the dual fuel internal combustion engine in accordance with one or more parameters received by the sensors 112, and 114.

The control unit 50 may be a general engine control unit (ECU) capable of controlling numeral functions associated with the engine and/or its associated components. The control unit 50 may include all the components required to run an application such as, for example, a memory, a secondary storage device, and a processor such as a central processing unit or any other means known in the art for controlling the dual fuel internal combustion engine 10 and its various components. Various other known circuits may be associated with the control unit 50, including power supply circuitry, signal-conditioning circuitry, communication circuitry, and other appropriate circuitry. The control system may analyze and compare received and stored data, and, based on instructions and data stored in memory or input by a user, determine whether action is required.

For example, the control unit 50 may compare received values with target values, for example predetermined thresholds, stored in the memory, and, based on the results of the comparison, the control unit 50 may transmit signals to one or more components to alter the operation status thereof.

The control unit 50 may include any memory device known in the art for storing data relating to operation of the combustion engine and its components. The data may be stored in the form of one or more maps that describe and/or relate, for example, to the operation of the main fuel injector 30 and/or the ignition fuel injector 42. Each of the maps may be in the form of tables, graphs, and/or equations, and include a compilation of data collected from lab and/or field operation of the dual fuel internal combustion engine. The maps may be generated by performing instrumented tests on the operation of the combustion engine under various operating conditions while varying parameters associated therewith. The control unit 50 may reference these maps and control operation of one component in response to the desired operation of another component.

The control system may further comprise a proportional-integral-derivative (PID) module, which may be configured to compare, for example, two parameters and then, if necessary, perform an adjustment setting of another parameter to have predetermined engine conditions.

For instance, during the GFM, the control system may be further configured to control the opening times of the gas admission valve 36, thereby controlling the amount of gaseous fuel to be mixed with intake air 60 streaming from the inlet manifold 18 into the combustion chamber 13 while the inlet valve 16 is opened. The control system may be further configured to control the amount of ignition fuel injected into the combustion chamber 13 by the ignition fuel injector 42 at the end of the compression stroke to initiate the combustion process.

During the LFM, the control system may be further configured to control the amount of liquid fuel injected by the main fuel injector 30 into the combustion chamber 13 and to control the operation of the ignition fuel injection system.

During both modes, the LFM and the GFM, the control system may further control the timing of the injection of liquid fuel or gaseous fuel with respect to the movement of the piston 14 and the opening times of the intake valve 16 and exhaust valve 20.

The common rail pressure may be constant for the LFM and the GFM in a range between 800 bar and 1500 bar. The injected fuel amount may be proportional to the common rail pressure, which means that the injected fuel amount may be set by the opening and closing time of the main fuel injector 30 and the ignition fuel injector 42, respectively.

During operation of the ignition fuel injection system, the actual fuel amount supplied to the common rail 34 by the high-pressure fuel pump 100 may correspond to the fuel amount injected into the combustion chamber 13 by the ignition fuel injectors 42 of the set of cylinder units.

The control system may calculate a required fuel amount to be injected into the combustion chambers 13 in accordance with a required power output, for example, set by an operator of the dual fuel internal combustion engine 10. For maintaining the pressure within the common rail 34, the fuel amount taken out of the common rail 34 may be equal to the fuel amount supplied to the common rail 34 by the high-pressure fuel pump 100.

During operation, the fuel amount supplied to the common rail 34 may be controlled by adjusting an operating parameter of the high-pressure fuel pump 100. For instance, the operating parameter may be a voltage supplied to the high-pressure fuel pump 100 which may be proportional to the supplied fuel amount, or may relate in any other reproducible manner to the supplied fuel amount.

The voltage supplied to the high-pressure fuel pump 100 may set the common rail pressure, which may be required to inject the necessary fuel amounts to satisfy the power request of the dual fuel internal combustion engine 10.

In the case of proper mechanical function of the ignition fuel injector 42 and the high-pressure fuel pump, the required common rail pressure may be equal to the actual common rail pressure measured by the common rail pressure sensor 112.

In the case of mechanical malfunction of one of the ignition fuel injectors 42 or the high-pressure fuel pump 100, the fuel amount injected from the common rail 34 into the combustion chambers 13 by the ignition fuel injectors 42 may be higher than the fuel amount supplied to the common rail 34 by the high-pressure fuel pump 100. For instance, the ignition fuel injector needle may be stuck in an open position or a high-pressure fuel pump 100 may be broken, which may lead to a decrease of the, for example, common rail pressure.

In some embodiments, the fuel amount injected from the common rail 34 into the combustion chambers 13 by the ignition fuel injectors 42 may be lower than the fuel amount supplied to the common rail 34 by the high-pressure fuel pump 100. For instance, the ignition fuel injector needle may be stuck in a closed position, which may lead to an increase of the, for example, common rail pressure.

In those cases, for example, a PID module (not shown) of the control unit 50 may be configured to derive a correction fuel amount ΔQ. The correction fuel amount ΔQ may be additionally supplied by the high-pressure fuel pump 100 to the common rail 34 for maintaining the required common rail pressure at the constant level. In cases, the fuel amount supplied by the high-pressure fuel pump 100 may be reduced by the correction fuel amount ΔQ for maintaining the required common rail pressure at the constant level. The correction fuel amount ΔQ may be derived based on the difference between the actual common rail pressure and the required common rail pressure.

If the correction fuel amount ΔQ is below a predetermined fuel amount threshold, it may be determined that the ignition fuel injection system, in particular the ignition fuel injector 42, may be mechanically working properly. Such deviations between the actual and the required common rail pressure may be acceptable and tolerable. For example, the predetermined fuel amount threshold may be about 5 % of the total amount of fuel supplied to the common rail system during proper operation.

If the correction fuel amount ΔQ 100 exceeds the predetermined fuel amount threshold, it may be determined that the ignition fuel injection system, in particular one of the ignition fuel injectors 42 of the high pressure fuel pump 100, may be mechanically not working properly.

Furthermore, the control system may monitor the electrical function of the ignition fuel injector 42 by monitoring the operating parameter of the ignition fuel injector 42. For example, the operating parameter may be a voltage supplied to the ignition fuel injector 42. Specifically, if it is monitored that the supplied voltage exceeds an upper voltage threshold, it may be determined that there is an electrical short. If it is monitored that the supplied voltage falls below a lower voltage threshold, it may be determined that there is a wire break, or the power supply wire providing voltage to the ignition injector 42 may be damaged otherwise.

The control system may also monitor the electrical function of the high-pressure fuel pump 100. The principle of monitoring the electrical function of the high-pressure fuel pump 100 may correspond to for the principle for monitoring the ignition fuel injector 42 as described above.

A malfunction of the ignition fuel injection system may affect control of the dual fuel internal combustion engine 10. For example, during the GFM, in the case of a mechanical malfunction of the ignition fuel injection system, the dual fuel internal combustion engine 10 may be automatically switched over to the LFM. During the LFM, in the case of a mechanical malfunction of the ignition fuel injection system, the dual fuel internal combustion engine 10 may not be allowed to switch-over to the GFM, and, thus, may maintain operation in the LFM.

### Industrial Applicability

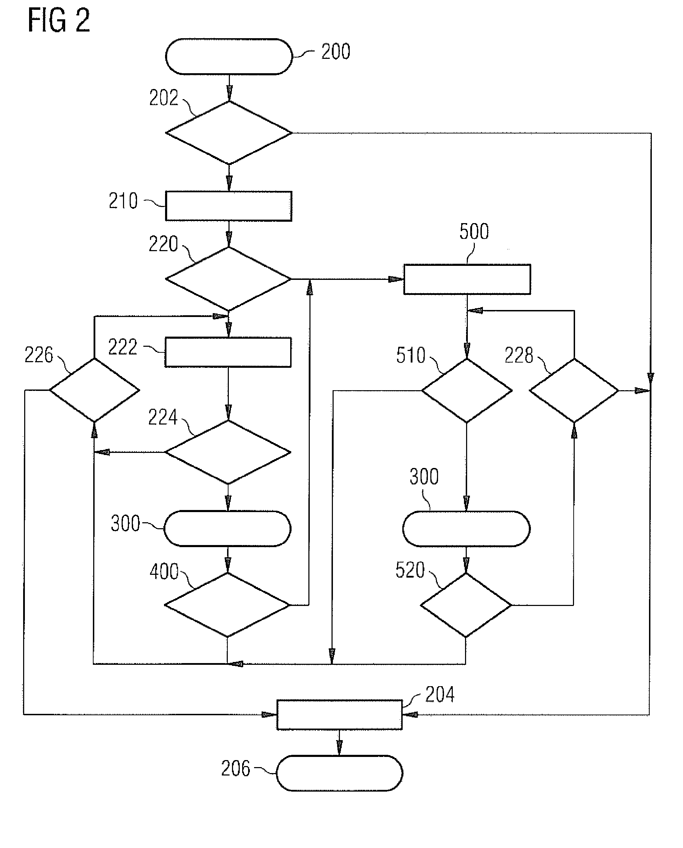

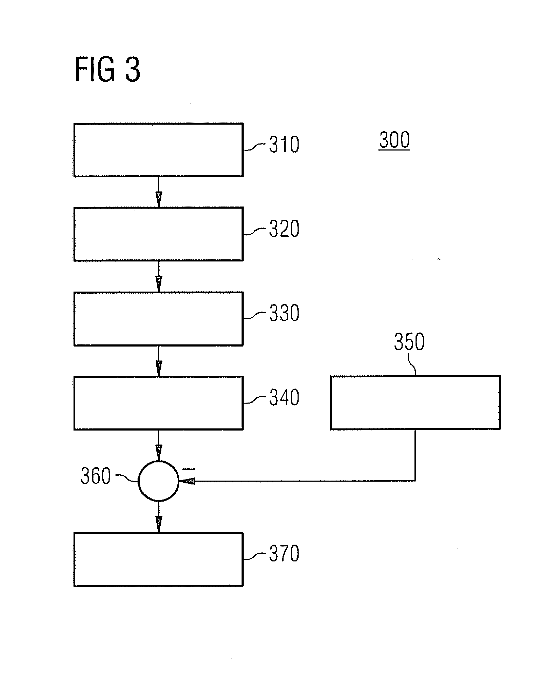

In the following, a method for operating a dual fuel internal combustion engine 10 as schematically shown for example in Fig. 1 is described with reference to Figs. 2 and 3.

Referring to Fig. 2, a flow chart illustrating controlling operation of the dual fuel internal combustion engine 10 is shown beginning at step 200. First, it may be checked whether the duel fuel internal combustion engine 10 is in an operative state or not (step 202). If the dual fuel internal combustion engine 10 is not operating (for example, the dual fuel internal combustion engine 10 is in an "OFF" state), the program may proceed to step 204, which declares that the engine is not operating, and the program may terminate in a subsequent step (206).

At step 202, if it is determined that the dual fuel internal combustion engine 10 is operating (i.e. the dual fuel internal combustion engine 10 is in an "ON" state), the program may proceed to step 210, and it is declared, that the dual fuel internal combustion engine is operating.

The determination of the dual fuel internal combustion engine 10 being operating or not may be achieved by measuring, for instance, the rotational speed, the power output, or any other parameter indicative of an operational combustion engine.

Subsequently, the program may check whether the dual fuel internal combustion engine is in the LFM (step 220). If the dual fuel internal combustion engine is in the LFM, the engine is operating in the LFM (step 222).

Next, at step 224, it may be checked whether the operator intends to switch the dual fuel internal combustion engine 10 over to the GFM. If it is determined that the operator does not want to switch over to the GFM, the program may proceed to step 226 where it may be once again checked whether the dual fuel internal combustion engine is still operating. If it is determined, for example, that the dual fuel internal combustion engine has been switched off in the meantime, the program may proceed to steps 204 and 206 as described above.

Alternatively, the dual fuel internal combustion engine may be still operating in the LFM (step 222).

If it is detected that an operator intends to switch the dual fuel internal combustion engine 10 over to the GFM (step 224), a mechanical function check of the ignition fuel injection system is performed at steps 300 and 400 for assessing whether the ignition fuel injection system may be mechanically working properly and, thus, switching over to GFM is possible. The mechanical function check of the ignition fuel injection system may be based on a correction fuel amount ΔQ, which may be calculated at step 300.

Referring to Fig. 3, an exemplary determination of the correction fuel amount ΔQ of step 300 is illustrated. First, at step 310, the requested fuel amount injected by the ignition fuel injectors 42 may be determined.

At step 320, based on the requested injected fuel amounts, a fuel amount to be supplied to the common rail 34 by the high-pressure fuel pump 100 for maintaining the required common rail pressure within the common rail 34 may be derived.

The fuel amount supplied by the high-pressure fuel pump 100 may relate to the voltage supplied to the high-pressure fuel pump 100 which is determined at step 330.

The voltage supply may be in turn indicative of the required common rail pressure p (rail, required) which is determined at step 340.

In addition, the actual common rail pressure p (rail, actual) may be measured, for instance, by the common rail pressure sensor 112 (step 350) and provided to the PID module.

At step 360, the required common rail pressure p (rail, required) may be compared to the actual common rail pressure p (rail, actual), for example, using the PID module.

If there is a deviation between the two pressure values (step 360), the PID module may derive the correction fuel amount ΔQ to be additionally supplied by the high-pressure fuel pump 100, step 370. By adjusting the fuel amount supplied by the high-pressure fuel pump, the common rail 34 may maintain the required common rail pressure and, thus, the deviation between the required common rail pressure p (rail, required) and the actual common rail pressure p (rail, actual) may be eliminated. After deriving the correction fuel amount ΔQ, the program may proceed to step 400 in Fig. 2.

Returning to Fig. 2, the correction fuel amount ΔQ may be compared to a fuel amount threshold predetermined for LFM at step 400. The correction fuel amount ΔQ may be indicative of the mechanical function of the ignition fuel injector 42. In the case of, for example, an ignition fuel injector needle stuck in an open position, the high-pressure fuel pump may supply a higher amount of liquid fuel to the common rail 34 for maintaining the required common rail pressure, as fuel from the common rail may continuously drain though the ignition fuel injector 42.

For example, at step 400, if the correction fuel amount ΔQ exceeds the predetermined fuel amount threshold, it may be declared that the ignition fuel injection system may not be mechanically working properly. Thus, the method may proceed to step 226, and the dual fuel internal combustion engine 10 may be prevented from switching over to the GFM and may maintain operation in the LFM.

If the correction amount ΔQ does not exceed the predetermined fuel amount threshold at step 400, the ignition fuel injection system may be declared as mechanically working properly. Thus, the dual fuel internal combustion engine 10 may switch over to the GFM, and the method may proceed to step 500, where the dual fuel internal combustion engine may be operated in the GFM.

At step 220, it may be determined that the engine is operating in the GFM (step 500).

Subsequently, at step 510, it is determined whether the operator intends to switch back to the LFM. If it is determined, that the operator does not intend to switch over to the LFM, the program may determine and evaluate the correction fuel amount ΔQ (step 300) as described above.

During the GFM, if the correction fuel amount ΔQ does not exceed a fuel amount threshold predetermined for GFM (step 520), the program may proceed with operating in the GFM. At step 228, it may be once again checked if the dual fuel internal combustion engine 10 is still operating. If doing so, the dual fuel internal combustion engine may maintain operation in the GFM and the method may return to step 510 as the ignition fuel injector 42 may be mechanically working properly.

As long as the dual fuel internal combustion engine may be in the "ON" state and as long as the operator may not intend to switch the dual fuel internal combustion engine 10 over to the LFM and as long as the ignition fuel injector 42 may be mechanically working properly, the dual fuel internal combustion engine may maintain operation in the GFM.

At step 520, if it is determined that the correction fuel amount ΔQ exceeds the predetermined fuel amount threshold, for example, one of the ignition fuel injector needles is jammed, the dual fuel internal combustion engine may automatically switch over to the LFM, namely to step 226.

At step 510, if the operator may intend to switch over from the GFM to the LFM, the method may also return to step 226 and the dual fuel internal combustion engine may be subsequently operated in the LFM.

In some embodiments, the mechanical function check of the ignition fuel injection system may be directly based on the deviation between the required fuel rail pressure and the actual fuel rail pressure. If the pressure deviation exceeds a predetermined pressure threshold, the ignition fuel injection system may be declared as not mechanically working properly. In this case, a determination of a correction fuel amount may not be necessary.

In some embodiments, the mechanical function check of the ignition fuel injection system may include an electrical function check known in the art. The dual fuel internal combustion engine may then be operated in the GFM in the case of a proper mechanical and electrical function of the ignition fuel injection system and may automatically switch over to the LFM when a mechanical and/or electrical malfunction of the ignition fuel injection system may be determined.

The disclosed control system may be used on internal combustion engines of middle to large size. In particular, the dual fuel internal combustion engine 10 may be sized and configured to be used, for instance, in vessels, larger ships, or in power plants. Dual fuel engines of such a size may have a power output of 500 kW/cylinder or more and, for example, 6 to 20 cylinders.

In addition, the term "internal combustion engine" as used herein is not specifically restricted and comprises any engine, in which the combustion of a fuel occurs with an oxidizer to produce high temperature and pressure gases These gases are directly applied to a movable component of the engine, such as pistons or turbine blades, so as to cause the component to move and thus generate mechanical energy. Thus, as used herein, the term "internal combustion engine" comprises piston engines.

Although the preferred embodiments of this invention have been described herein, improvements and modifications may be incorporated without departing from the scope of the following claims.

## Claims

1. A method for checking the mechanical function of a fuel injection system of a dual fuel internal combustion engine (10) with a common rail (34) and a high-pressure fuel pump (100) for supplying the fuel injection system with fuel, the method comprising:
deriving a required common rail pressure based on a fuel amount to be injected;
measuring an actual common rail pressure;
determining a pressure deviation between the required common rail pressure and the actual common rail pressure; and
declaring the fuel injection system as not mechanically working properly based on an analysis of the pressure deviation.

2. The method of claim 1, wherein deriving the required common rail pressure comprises:
deriving a fuel amount to be supplied to the common rail (34) by the high-pressure fuel pump (100) that relates to the fuel amount to be injected;
deriving an operating parameter of the high-pressure fuel pump (100) based on the fuel amount to be supplied to the common rail (34); and
deriving the required common rail pressure based on the operating parameter of the high-pressure fuel pump (100).

3. The method of claim 1 or claim 2, wherein
the analysis of the pressure deviation comprises deriving a correction fuel amount based on the pressure deviation, and
the declaration of the fuel injection system as not mechanically working properly is based on the correction fuel amount.

4. The method of claim 3, wherein the fuel injection system is declared as not mechanically working properly when it is determined in the analysis that the correction fuel amount exceeds a predetermined fuel amount threshold.

5. The method of claim 3 or claim 4, wherein, when it is determined in the analysis that the correction fuel amount is within a predetermined fuel amount threshold, the correction fuel amount is considered when determining the fuel amount to be supplied to the common rail (34) by the high-pressure fuel pump (100).

6. The method of claim 1 or claim 2, wherein the fuel injection system is declared as not mechanically working properly when it is determined in the analysis that the pressure deviation exceeds a predetermined pressure threshold.

7. The method of any one of claims 1 to 6, further comprising checking the electrical function of a fuel injector (30, 42) of the fuel injection system, and
declaring the fuel injector (30, 42) as not electrically working properly when an operating parameter of the fuel injector (30, 42) exceeds an upper threshold, for example, indicative for an electrical short, or the operating parameter of the fuel injector (30, 42) falls below a lower threshold, for example, indicative for a wire break.

8. The method of any one of claims 1 to 7, further comprising checking the electrical function of the high-pressure fuel pump (100), and
declaring the high-pressure fuel pump (100) as not electrically working properly when an operating parameter of the high-pressure fuel pump (100) exceeds an upper threshold, for example, indicative for an electrical short, or the operating parameter of the high-pressure fuel pump (100) falls below a lower threshold, for example, indicative for a wire break.

9. A method for controlling a switchover process between a gaseous fuel mode and a liquid fuel mode of a dual fuel internal combustion engine (10) with an ignition fuel injection system, the method comprising:
checking the mechanical function of the ignition fuel injection system according to any one of the preceding claims; and
preventing the switchover process to the gaseous fuel mode if, during the liquid fuel mode, the ignition fuel injection system is declared as not mechanically working properly.

10. A method for controlling a switchover process between a gaseous fuel mode and a liquid fuel mode of a dual fuel internal combustion engine (10) with an ignition fuel injection system, the method comprising:
checking the mechanical function of the ignition fuel injection system according to any one of the claims 1 to claim 8; and
switching over to the liquid fuel mode if, during the gaseous fuel mode, the ignition fuel injection system is declared as not mechanically working properly.

11. A control system of a dual fuel internal combustion engine (10) comprising a fuel injection system, the control system comprising:
a pressure sensor for measuring a pressure within a common rail (34); and
a control unit (50) configured to check the mechanical function of the fuel injection system according to a method of any one of the claims 1 to 10.

12. The control system of claim 11, wherein the control unit (50) comprises a proportional-integral-derivative module being configured to determine a pressure deviation between the required common rail pressure and the actual common rail pressure.

13. The control system of claim 12, wherein the proportional-integral-derivative module is further configured to derive a correction fuel amount based on the pressure deviation.

14. The control system of claim 13, wherein the proportional-integral-derivative module is further configured to provide correction fuel amount control value to the high-pressure fuel pump (100) for adapting the fuel to be supplied to the common rail (34).

15. A dual fuel internal combustion engine (10) comprising:
a common rail system with a common rail (34);
an ignition fuel injection system with an ignition fuel injector (42) and a high pressure fuel pump (100); and
a control system according to any one of claims 11 to 14.
